# EUROPEAN PATENT APPLICATION

(11) **EP 3 691 200 A1**
(43) Date of publication of application: **05.08.2020**
(21) Application number: 18869516.7
(22) Date of filing: 17.10.2018
(51) Int. Cl.: H04L 12/46

(54) **METHOD, DEVICE AND SYSTEM FOR DETERMINING TRAFFIC TRANSMISSION PATH IN NETWORK**

(30) Priority: 27.10.2017 CN 201711020259
(71) Applicant: Huawei Technologies Co., Ltd., Longgang District Shenzhen, Guangdong 518129 (CN)
(72) Inventor: ZENG, Wanmei, Shenzhen Guangdong 518129 (CN); GAO, Yuan, Shenzhen Guangdong 518129 (CN)
(74) Representative: Gill Jennings & Every LLP
(86) International application number: PCT/CN2018/110557
(87) International publication number: WO 2019/080750

(57) **Abstract**

This application provides a method for determining a traffic transmission path on a network. The method includes: sending, by a first L3GW, a first packet to a host on a same subnet as the first L3GW; receiving, by the first L3GW, a response packet for the first packet that is sent by the destination host; and generating, by the first L3GW, a route pointing to the destination host based on the response packet for the first packet, and sending the route to the first network device. By using the foregoing method, a problem of a traffic detour when a core router sends traffic to the destination host in a data center can be avoided.

## Description

This application claims priority to Chinese Patent Application No. 201711020259.2, filed with the Chinese Patent Office on October 27, 2017 and entitled "METHOD, DEVICE, AND SYSTEM FOR DETERMINING TRAFFIC TRANSMISSION PATH ON NETWORK", which is incorporated herein by reference in its entirety.

### TECHNICAL FIELD

The present invention relates to the field of communications technologies, and in particular, to a method, a device, and a system for determining a traffic transmission path on a network.

### BACKGROUND

Data centers can speed up transmission of network information, and therefore, enterprises and providers are vigorously building data centers. Currently, large-scale deployment, virtualization, and cloud computing have already become development directions of a data center. In addition, to adapt to a greater service amount and reduce maintenance costs, the data center gradually transfers to a large layer 2 technology and virtualization.

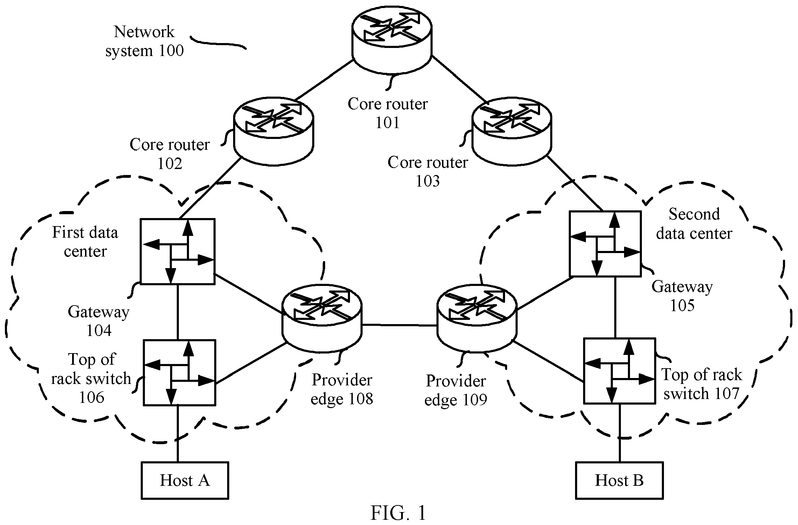

On one hand, the data center is widely used. On the other hand, there are some problems with the data center. As shown in FIG 1, a network includes a first data center and a second data center. A layer 3 gateway 104 of the first data center and a layer 3 gateway 105 of the second data center can both learn, based on an address resolution protocol (English: Address Resolution Protocol, ARP for short) address entry and a routing table, a route to a host in the first data center and a route to a host in the second data center. However, when forwarding layer 3 traffic that is on a same network segment, a core router 101 may send the layer 3 traffic to an L3GW1 of the first data center, or may forward the layer 3 traffic to an L3GW2 of the second data center. If a destination host 1 (such as a host A) to be accessed by the traffic is in the first data center, the traffic may be forwarded to the L3GW1 of the first data center, or may be forwarded to the L3GW2 of the second data center. If the traffic is forwarded to the L3GW2 of the second data center, the traffic needs to make a detour from the second data center to the first data center, and then reaches the host 1 in the first data center, and consequently, a traffic detour is caused and forwarding efficiency is reduced.

### SUMMARY

Embodiments of this application provide a packet transmission method and a network device, so as to avoid a problem that forwarding efficiency is reduced because of a traffic detour.

According to a first aspect, this application provides a method for determining a traffic transmission path on a network. The network includes a first data center, a second data center, and a first network device. The first data center includes a first layer 3 gateway L3GW. The second data center includes a second L3GW. The first L3GW and the second L3GW are on a same subnet. The first network device outside the first data center sends traffic to the first data center by using the first L3GW. The first network device outside the second data center sends the traffic to the second data center by using the second L3GW. The method includes:
sending, by the first L3GW, a first packet to a host on the same subnet as the first L3GW, where a source MAC address of the first packet is a virtual media access control MAC address of the first L3GW;
receiving, by the first L3GW, a response packet for the first packet that is sent by the destination host, where a destination MAC address of the response packet for the first packet is the virtual MAC address, and a source MAC address of the response packet for the first packet is a MAC address of the destination host; and
generating, by the first L3GW, a route pointing to the destination host based on the response packet for the first packet, and sending the route to the first network device, where the route is used as a basis for the first network device to send the traffic to the destination host.

With reference to the first aspect, in a first possible implementation, before the sending, by the first L3GW, a first packet to a host on the same subnet as the first L3GW, the method further includes:
sending, by the first L3GW, a second packet to the host on the same subnet as the first L3GW, where a source MAC address of the second packet is a MAC address of the first L3GW;
receiving, by the first L3GW, a response packet for the second packet that is sent by the destination host, where a destination MAC of the response packet for the second packet is the MAC address of the first L3GW; and
not generating, by the first L3GW, the route pointing to the destination host based on the response packet for the second packet.

With reference to the first aspect, in a second possible implementation, the first packet is an address resolution protocol ARP packet or a neighbor discovery ND packet.

With reference to the first aspect, in a third possible implementation, the virtual MAC address of the first L3GW is a virtual MAC address generated by the first L3GW and the second L3GW by using a virtual router redundancy protocol VRRP

According to a second aspect, this application provides a method for determining a traffic transmission path on a network. The network includes a first data center and a second data center. A first layer 3 gateway L3GW of the first data center and a second L3GW of the second data center are on a same subnet. A first provider edge PE device of the first data center and a second PE device of the second data center are interconnected. The method includes:
receiving, by the first PE device, a first packet sent by the first L3GW to a host on the same subnet as the first L3GW, where the first packet includes a virtual media access control MAC address of the first L3GW; and
filtering, by the first PE device, the first packet according to a forwarding rule set by an interface of the first PE device.

With reference to the second aspect, in a first possible implementation, the filtering, by the first PE device, the first packet according to a forwarding rule set by an interface of the first PE device includes:
confirming, by the first PE device, that the first packet carries the virtual MAC address of the first L3GW, and discarding the first packet according to the forwarding rule.

According to a third aspect, this application provides a first layer 3 gateway L3GW for determining a traffic transmission path on a network. The network includes a first data center, a second data center, and a first network device. The first data center includes a first L3GW. The second data center includes a second L3GW. The first L3GW and the second L3GW are on a same subnet. The first network device outside the first data center sends traffic to the first data center by using the first L3GW. The first network device outside the second data center sends the traffic to the second data center by using the second L3GW. The first L3GW includes:
a sending unit, configured to send a first packet to a host on the same subnet as the first L3GW, and send, to the first network device, a route to a destination host, where the route is used as a basis for the first network device to send the traffic to the destination host, and a source MAC address of the first packet is a virtual media access control MAC address of the first L3GW;
a receiving unit, configured to receive a response packet for the first packet that is sent by the destination host, where a destination MAC address of the response packet for the first packet is the virtual MAC address, and a source MAC address of the response packet for the first packet is a MAC address of the destination host; and
a processing unit, configured to generate the route pointing to the destination host based on the response packet for the first packet.

With reference to the third aspect, in a first possible implementation, the sending unit is further configured to send, before the first L3GW sends the first packet to the host on the same subnet as the first L3GW, a second packet to the host on the same subnet as the first L3GW, where a source MAC address of the second packet is a MAC address of the first L3GW; and
the receiving unit is further configured to receive a response packet for the second packet that is sent by the destination host, where a destination MAC of the response packet for the second packet is the MAC address of the first L3GW.

According to a fourth aspect, this application provides a first provider edge PE device for determining a traffic transmission path on a network. The network includes a first data center and a second data center. A first layer 3 gateway L3GW of the first data center and a second L3GW of the second data center are on a same subnet. The first PE device of the first data center and a second PE device of the second data center are interconnected. The device includes:
a receiving unit, configured to receive a first packet, where the first packet includes a virtual media access control MAC address, and the virtual MAC is a virtual MAC address generated by the first L3GW and the second L3GW by using a virtual router redundancy protocol; and
a processing unit, configured to filter the first packet according to a forwarding rule set by an interface of the first PE device, where the forwarding rule is to filter a packet including a virtual MAC address.

With reference to the fourth aspect, in a first possible implementation, the processing unit is specifically configured to discard the first packet including the virtual MAC address according to the forwarding rule set by the interface of the first PE device.

According to a fifth aspect, this application provides a system for determining a traffic transmission path on a network. The network includes a first data center, a second data center, and a first network device. A first layer 3 gateway L3GW of the first data center and a second L3GW of the second data center are on a same subnet. The first network device outside the first data center sends traffic to the first data center by using the first L3GW. The first network device outside the second data center sends the traffic to the second data center by using the second L3GW. A first provider edge PE device of the first data center and a second PE device of the second data center are interconnected. The system includes:
the first L3GW, configured to send a first packet to a host on the same subnet as the first L3GW, send, to the first network device, a route to a destination host, receive a response packet for the first packet that is sent by the destination host, and generate the route pointing to the destination host based on the response packet for the first packet, where a source MAC address of the first packet is a virtual media access control MAC address of the first L3GW, a destination MAC address of the response packet for the first packet is the virtual MAC address, a source MAC address of the response packet for the first packet is a MAC address of the destination host, and the route is used as a basis for the first network device to send the traffic to the destination host; and
the first PE device, configured to receive the first packet, and filter the first packet according to a forwarding rule set by an interface of the first PE device, where the first packet includes the virtual media access control MAC address, and the virtual MAC is a virtual MAC address generated by the first L3GW and second L3GW by using a virtual router redundancy protocol.

With reference to the fifth aspect, in a first possible implementation, the first L3GW is further configured to send, before the first L3GW sends the first packet to the host on the same subnet as the first L3GW, a second packet to the host on the same subnet as the first L3GW, receive a response packet for the second packet that is sent by the destination host, and not to generate the route pointing to the destination host based on the response packet for the second packet, where a source MAC address of the second packet is a MAC address of the first L3GW, and a destination MAC of the response packet for the second packet is the MAC address of the first L3GW.

According to a sixth aspect, this application provides a computer readable storage medium. The computer readable storage medium stores an instruction. When the instruction is run on a computer, the computer is enabled to perform the method according to the first aspect and the possible implementations of the first aspect.

According to a seventh aspect, this application provides another computer readable storage medium. The computer readable storage medium stores an instruction. When the instruction is run on a computer, the computer is enabled to perform the method according to the second aspect and the possible implementation of the second aspect.

According to an eighth aspect, this application provides a network device. The network device includes a network interface, a processor, a memory, and a bus used to connect the network interface, the processor, and the memory. The memory is configured to store a program, an instruction, or code. The processor is configured to execute the program, the instruction, or the code in the memory, to complete the method according to the first aspect and the possible implementations of the first aspect.

According to a ninth aspect, this application provides a network device. The network device includes a network interface, a processor, a memory, and a bus used to connect the network interface, the processor, and the memory. The memory is configured to store a program, an instruction, or code. The processor is configured to execute the program, the instruction, or the code in the memory, to complete the method according to the second aspect and the possible implementation of the second aspect.

### BRIEF DESCRIPTION OF DRAWINGS

FIG 1 is a schematic diagram of an application scenario according to an embodiment of the present invention;
FIG 2 is a schematic flowchart of a method for determining a traffic transmission path on a network according to an embodiment of the present invention;
FIG. 3 is a schematic flowchart of another method for determining a traffic transmission path on a network according to an embodiment of the present invention;
FIG. 4 is a schematic flowchart of another method for determining a traffic transmission path on a network according to an embodiment of the present invention;
FIG. 5 shows an L3GW according to an embodiment of the present invention;
FIG. 6 shows a PE device according to an embodiment of the present invention;
FIG. 7 shows another L3GW according to an embodiment of the present invention;
FIG. 8 shows another PE device according to an embodiment of the present invention; and
FIG 9 shows a system for determining a traffic transmission path on a network according to an embodiment of the present invention.

### DESCRIPTION OF EMBODIMENTS

In the specification, claims, and accompanying drawings of the present invention, the terms "first", "second", and the like (if they exist) are intended to distinguish between similar objects, but do not necessarily indicate a specific order or sequence. It should be understood that the data used in such a way are interchangeable in proper circumstances, so that the embodiments described herein can be implemented in other orders than the order illustrated or described herein. In addition, the terms "include", "contain", and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

FIG 1 is a schematic diagram of a system architecture for transmitting traffic on a network. The network system 100 includes a core router 101, a core router 102, a core router 103, a first data center, a second data center, a host A connected to the first data center, and a host B connected to the second data center. A top of rack switch 106 of the first data center is connected to the host A, and a top of rack switch 107 of the second data center is connected to the host B. The core router 102 is connected to the first data center through a gateway 104 of the first data center. The core router 103 is connected to the second data center through a gateway 105 of the second data center. The core router 102 and the core router 103 are separately connected to the core router 101. The first data center is connected to the second data center through a provider edge 108 (English: provider edge, PE device for short) of the first data center and a PE device 109 of the second data center. For the first data center, the gateway 104, the top of rack switch 106, and the PE device 108 are interconnected to constitute a basic architecture of the first data center; and for the second data center, the gateway 105, the top of rack switch 107, and the PE device 109 are interconnected to constitute a basic architecture of the second data center. Because the first data center and the second data center are on a same subnet, the core router 101 may obtain a route to the first data center by using the gateway 104 of the first data center, and the core router 101 may also obtain a route to the second data center by using the gateway 105 of the second data center. Therefore, when forwarding traffic, the core router 101 may not only forward the traffic to the first data center by using the core router 102 and the gateway 104 of the first data center, but may also forward the traffic to the second data center by using the core router 103 and the gateway 105 of the second data center.

If a destination host to be accessed by the traffic is the host B connected to the second data center, when the first data center and the second data center are on the same subnet, the core router 101 may choose to send the traffic to the first data center by using the core router 102 and the first data gateway 104, then the gateway 104 of the first data center sends the traffic to the second data center through route learning and by using the PE device 108, and finally access by the traffic to the host B is implemented. Alternatively, the core router 101 may choose to send the traffic to the second data center by using the core router 103 and the gateway 105 of the second data center, the gateway 105 of the second data center sends the traffic to the top of rack switch 107 through route learning, and the top of rack switch 107 sends the traffic to the host B.

It may be learned from the foregoing analysis that when the traffic is to access the host B, and the core router 101 chooses to send the traffic to the first data center by using the core router 102 and the gateway 104 of the first data center, a problem of a traffic detour occurs, that is, the traffic makes a detour from the first data center to the second data center, so as to reach the host B. Consequently, forwarding efficiency is reduced because of the traffic detour.

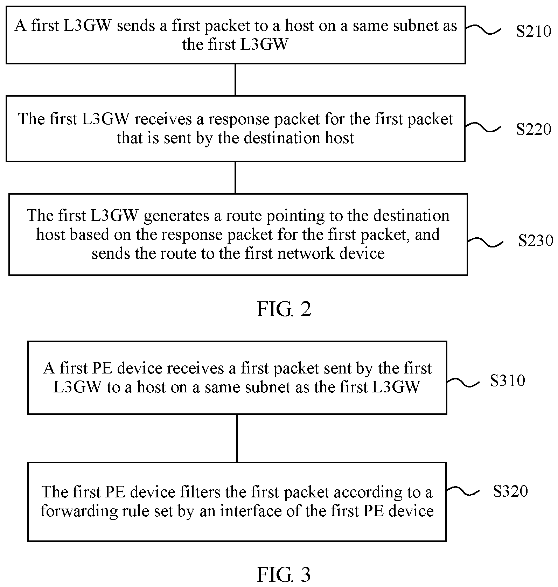

To resolve the foregoing technical problem, this application provides a method for determining a traffic transmission path on a network. A schematic flowchart of the method is shown in FIG 2. The network includes a first data center, a second data center, and a first network device. The first data center includes a gateway 104, which is referred to as a first L3GW in this embodiment. The second data center includes a gateway 105, which is referred to as a second L3GW in this embodiment. The first L3GW and the second L3GW are on a same subnet. The first network device outside the first data center sends traffic to the first data center by using the first L3GW. The first network device outside the second data center sends the traffic to the second data center by using the second L3GW. The first data center is connected to the second data center by using a first PE device of the first data center. The method may be performed by the first L3GW of the first data center or the second L3GW of the second data center. The method includes the following steps.

S210. The first L3GW sends a first packet to a host on the same subnet as the first L3GW, where a source MAC address of the first packet is a virtual media access control MAC address of the first L3GW.

In a possible implementation, the first packet may be an ARP probe packet, a gratuitous ARP packet, or a neighbor discovery (English: neighbor discovery, ND for short) request packet. The first L3GW and the second L3GW may constitute a VRRP group by using a virtual router redundancy protocol (English: Virtual Router Redundancy Protocol, VRRP for short), and be presented to the outside as a virtual IP address and a virtual MAC address. The first L3GW uses the virtual MAC address as the source MAC address of the first packet, and sends, through broadcast, the virtual MAC address to each host on the same subnet as the first L3GW.

For example, the first L3GW and the second L3GW may generate a virtual router by activating the VRRP. The virtual router includes one virtual MAC address and one virtual IP address. For example, the virtual MAC address of the virtual router generated by the first L3GW and the second L3GW by activating the VRRP is 00-00-5E-00-01-01-01. For a process in which the first L3GW and the second L3GW generate the virtual MAC address by using the VRRP, refer to description of a VRRP in RFC2338. No example is provided for description herein. The first L3GW uses the generated virtual MAC address as the source MAC address of the first packet, and sends, through broadcast, the virtual MAC address to each host on the same subnet as the first L3GW.

S220. The first L3GW receives a response packet for the first packet that is sent by the destination host, where a destination MAC address of the response packet for the first packet is the virtual MAC address, and a source MAC address of the response packet for the first packet is a MAC address of the destination host.

In a possible implementation, the destination host is a host on the same subnet as the first L3GW, and the first L3GW generates a route to the host based on the response packet for the first packet that is sent by the destination host. A type of the response packet for the first packet is the same as a type of the first packet. For example, when the first packet sent by the first L3GW is an ARP probe packet, the response packet for the first packet is an ARP response packet. The first L3GW sends, through broadcast, the first packet to each host on the same subnet as the first L3GW. Each host on the same subnet as the first L3GW receives the first packet. After receiving the first packet, each host on the same subnet as the first L3GW checks whether a destination IP address in the first packet is the same as an IP address of the host. If the destination IP address in the first packet is different from the IP address of the host, the host directly discards the first packet. If the destination IP address in the first packet is the same as the IP address of the host, the host is the destination host whose MAC address needs to be found by using the first packet. The destination host encapsulates the MAC address of the destination host in the response packet for the first packet, and sends, through unicast, the response packet for the first packet to the first L3GW, where the source MAC address of the response packet for the first packet is the MAC address of the destination host, and the destination MAC address of the response packet for the first packet is the virtual MAC address of the first L3GW. The first L3GW receives the response packet for the first packet.

S230. The first L3GW generates a route pointing to the destination host based on the response packet for the first packet, and sends the route to the first network device, where the route is used as a basis for the first network device to send the traffic to the destination host.

In a possible implementation, after receiving the response packet for the first packet, the first L3GW updates an ARP entry of the first L3GW based on the source MAC address of the response packet for the first packet, or generates a new ARP entry. The first L3GW generates the route pointing to the destination host by learning the ARP entry, and sends, to the first network device outside the first data center, the route to the destination host, so that the first network device sends the traffic to the destination host based on the route.

For example, when the first packet is an ARP probe packet, the response packet for the first packet is an ARP response packet. The first L3GW is configured so that the first L3GW is capable of generating the route pointing to the destination host based on the ARP response packet carrying the virtual MAC address. For example, a command arp virtual detect enable is configured for the first L3GW and the command is enabled, so that the first L3GW first determines a received packet. If the packet does not include the virtual MAC address of the first L3GW, for example, a destination MAC address of the packet is a real AMC address of the first L3GW, the first L3GW only generates or updates the ARP entry based on the packet, but does not generate the route according to the ARP entry. If the packet includes the virtual MAC address of the first L3GW, for example, the packet is the response packet for the first packet, the first L3GW not only generates or updates the ARP entry of the first L3GW based on the packet, but also learns the ARP entry by enabling a host routing function, so as to obtain an IP address of the destination host and an actual physical interface corresponding to the destination host, and generate a router entry including actual physical interface information, for example, generate an ARP virtual link (English: virtual link, Vlink for short) direct route having a 32-bit mask. The first L3GW sends the route to a core router by using a routing protocol, so that the core router obtains the route. The core router sends the traffic that is to access the destination host to the destination host based on the route, so as to determine a transmission path for sending the traffic. In this way, the core router sends the traffic to the corresponding destination host based on the route, and a case in which a traffic detour reduces efficiency of traffic transmission is avoided.

Optionally, before the step S210, the method further includes: The first L3GW sends a second packet to the host on the same subnet as the first L3GW, where a source MAC address of the second packet is the real MAC address of the first L3GW; and the first L3GW receives a response packet for the second packet that is sent by the destination host, where the first L3GW does not generate the route pointing to the destination host based on the response packet for the second packet, and a destination MAC of the response packet for the second packet is the real MAC address of the first L3GW. The first L3GW is configured so that the first L3GW does not generate the route pointing to the destination host based on the response packet for the second packet.

In a possible implementation, the second packet may be an ARP probe packet, a gratuitous ARP packet, or an ND request packet. For the second packet, before the first L3GW sends the first packet to the host on the same subnet as the first L3GW, the first L3GW sends, through broadcast, the second packet to each host on the same subnet as the first L3GW. Each host on the same subnet as the first L3GW receives the second packet. When receiving the second packet, each host on the same subnet as the first L3GW checks whether a destination IP address in the second packet is the same as an IP address of the host. If the destination IP address in the second packet is different from the IP address of the host, the host directly discards the first packet. If the destination IP address in the second packet is the same as the IP address of the host, the host is the destination host whose MAC address needs to be found by using the second packet. The destination host encapsulates the MAC address of the destination host in the response packet for the second packet, and sends, through unicast, the response packet for the second packet to the first L3GW, where a source MAC address of the response packet for the second packet is the MAC address of the destination host, and a destination MAC address of the response packet for the second packet is the real MAC address of the first L3GW. The first L3GW receives the response packet for the second packet. The command arp virtual detect enable is configured for the first L3GW and the command is enabled in step S230, so that a packet carries the real MAC address of the first L3GW, for example, the response packet for the second packet, and the first L3GW only learns the MAC address of the destination host in the packet to update or generate the ARP entry of the first L3GW, but does not generate the route according to the ARP entry. In this way, even if the first L3GW learns the MAC address of the destination host in another manner, the first L3GW may only update or generate the ARP entry based on content of the response packet, but cannot generate the route pointing to the destination host according to the updated or generated ARP entry, so that the following problem is avoided: The core router obtains, in another manner, the route pointing to the destination host, and consequently a traffic detour is caused.

FIG 3 is a schematic flowchart of another method for determining a traffic transmission path on a network according to this application. The network includes a first data center, a second data center, and a first network device. The first data center includes a first L3GW. The second data center includes a second L3GW. The first L3GW and the second L3GW are on a same subnet. A first PE device of the first data center is connected to a second PE device of the second data center. The method may be performed by the first PE device of the first data center or the second PE device of the second data center. The method includes the following steps.

S310. The first PE device receives a first packet sent by the first L3GW to a host on the same subnet as the first L3GW, where the first packet includes a virtual media access control MAC address of the first L3GW.

In a possible implementation, the first packet may be an ARP probe packet, a gratuitous ARP packet, or an ND request packet. The first packet may be sent by the first L3GW to the host on the same subnet as the first L3GW. The first L3GW and the second L3GW may constitute a VRRP group by using a VRRP, and be presented to the outside as a virtual internet protocol (English: Internet Protocol, IP for short) and a virtual MAC address. The first L3GW uses the virtual MAC address as a source MAC address of the first packet, and sends, through broadcast, the virtual MAC address to each host on the same subnet as the first L3GW. The first PE device receives the first packet.

S320. The first PE device filters the first packet according to a forwarding rule set by an interface of the first PE device.

In a possible implementation, an access control list (English: access control list, ACL for short) policy is configured for the interface of the first PE device, and a match condition is set for the PE device interface to classify and process the first packet. A virtual MAC address is usually 00-00-5E-00-01-{VRID}. 00-00-5E-00-01 is a fixed value of the virtual MAC address. In other words, all virtual MAC addresses carry 00-00-5E-00-01. {VRID} is not a fixed value, and different virtual MAC addresses have different values. For example, {VRID} may be 01, 02, or the like. Therefore, the interface of the first PE device may be configured to filter a packet carrying a virtual MAC address. In other words, the interface of the first PE device is set to filter a packet whose source address includes 00-00-5E-00-01, so as to prevent the first packet from being sent by the first PE device to the second data center. For example, the interface of the first PE device may be set to filter the packet whose source address includes 00-00-5E-00-01. The first PE device receives the first packet, and filters the first packet according to the forwarding rule. Because a source address of the first packet includes 00-00-5E-00-01, the first PE device filters the first packet, and the first PE device may discard the first packet.

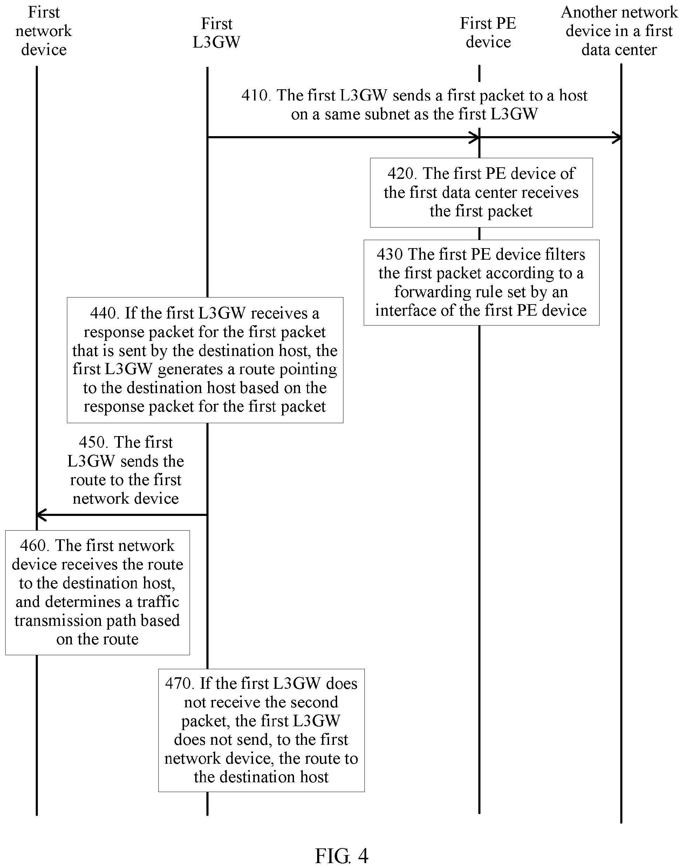

FIG 4 is a schematic flowchart of another method for determining a traffic transmission path on a network according to this application. The network includes a first data center, a second data center, and a first network device. The first data center includes a first L3GW. The second data center includes a second L3GW. The first L3GW and the second L3GW are on a same subnet. The first network device outside the first data center sends traffic to the first data center by using the first L3GW. The first network device outside the second data center sends the traffic to the second data center by using the second L3GW. The method may be performed by a first PE device of the first data center or a second PE device of the second data center. The method includes the following steps.

S410. The first L3GW sends a first packet to a host on the same subnet as the first L3GW, where a source MAC address of the first packet is a virtual media access control MAC address of the first L3GW.

In a possible implementation, the first packet may be an ARP probe packet, a gratuitous ARP packet, or an ND request packet. For example, the first L3GW sends, through broadcast, the ARP probe packet or the ND request packet to each network device in the first data center. For a specific implementation of this step, refer to step 210. Details are not described herein again.

S420. The first PE device of the first data center receives the first packet sent by the first L3GW to the host on the same subnet as the first L3GW.

S430. The first PE device filters the first packet according to a forwarding rule set by an interface of the first PE device.

In a possible implementation, the forwarding rule for filtering the first packet is configured for the interface of the first PE device, and the forwarding rule may be to filter a packet whose source address carries a virtual MAC address.

S440. If the first L3GW receives a response packet for the first packet that is sent by the destination host, the first L3GW generates a route pointing to the destination host based on the response packet for the first packet, where a destination MAC address of the response packet for the first packet is the virtual MAC address, and a source MAC address of the response packet for the first packet is a MAC address of the destination host.

In a possible implementation, if the first L3GW receives the response packet for the first packet, the first L3GW generates the route pointing to a target host by learning the response packet for the first packet and enabling a route advertisement function of the first L3GW. For a specific method for generating the route, refer to the description in step S230. Details are not described herein again.

S450. The first L3GW sends the route to the first network device, where the route is used as a basis for the first network device to send the traffic to the destination host.

In a possible implementation, the first network device may be a core router outside the first data center and the second data center. The route generated by the first L3GW may be introduced into a dynamic routing protocol for being advertised to the core router.

S460. The first network device receives the route to the destination host, and determines a transmission path for the traffic based on the route.

In a possible implementation, the route may be an ARP Vlink direct route, and the first network device may be a core router. The core router receives the ARP Vlink direct route. When the route is used to provide guidance for the core router to forward the traffic, the 32-bit route to the destination host can be matched, so that the core router can locally forward the traffic.

S470. If the first L3GW does not receive the first packet, the first L3GW is configured so that the first L3GW is incapable of generating the route.

In a possible implementation, before the first L3GW receives the first packet, the first L3GW has already obtained the MAC address of the destination host and generated or updated an ARP entry of the first L3GW. A specific manner of obtaining the ARP entry may be: Before the first PE of the first data center sets the forwarding rule, the first L3GW sends, through broadcast, a second packet to each host on a same network segment as the first L3GW, for example, sends, through broadcast, an ND request packet, where a source MAC address of the second packet is a real MAC address of the first L3GW, but not the virtual MAC address of the first L3GW; after obtaining the ND request packet, the destination host adds the MAC address of the destination host to an ND response packet, and sends, through unicast, the ND response packet to the first L3GW; and the first L3GW receives the ND response packet, and updates the ARP entry of the first L3GW based on an IP address of the destination host and the MAC address of the destination host in the ND response packet. The command arp virtual detect enable is configured for the first L3GW and the command is enabled in step S230, so that a packet carries the real MAC address of the first L3GW, for example, a response packet for the second packet, and the first L3GW only learns the MAC address of the destination host in the packet to update or generate the ARP entry of the first L3GW, but no longer generates the route according to the ARP entry. In this way, the following problem can be avoided: Before the first PE device sets a filtering rule, the first L3GW generates the route according to an obtained ARP entry and sends the route to the core router, and consequently a traffic detour is caused.

The following uses an example in which the first packet is the ARP probe packet, to describe the method for determining a traffic transmission path on a network.

The first L3GW of the first data center and the second L3GW of the second data center constitute a VRRP group by using a VRRP, and generate one virtual IP address and one virtual MAC address. For example, the generated virtual MAC address is 00-00-5E-00-01-01. The first L3GW uses the virtual MAC address 00-00-5E-00-01-01 as a source MAC address of the ARP probe packet, and sends, through broadcast, the virtual MAC address to each host on the same subnet as the first L3GW.

As shown in Table 1, when the first packet is the ARP probe packet, the source MAC address of the first packet is the virtual MAC address of the first L3GW, for example, the virtual MAC address is 0000-5EOO-0101; and a destination MAC of an Ethernet header of the first packet is FFFF-FFFF-FFFF, a destination address is 0000-0000-0000, and a destination IP address is the IP address of the destination host, for example, the IP address of the destination host is 10.10.10.2. A source IP address of the ARP probe packet may be an IP address of the first L3GW, or may be the virtual IP address generated by the first L3GW and the second L3GW by using the VRRP. This application imposes no limitation on a source IP address of the first packet. For example, the IP address may be the IP address 10.10.10.1 of the first L3GW.

**Table 1**

| | | | Ethernet field (28-byte ARP probe) | | | | | | | | |
|---|---|---|---|---|---|---|---|---|---|---|---|
| Ethernet header | | | ARP header | | | | | ARP packet | | | |
| Des | Sor | | | | | | | Sor | Sor IP | Des | Des IP |
| MAC | MAC | | | | | | | MAC | | MAC | |
| FFFF-FFFF-FFFF | 0000-5E00-0101 | 0x0806 | 11 | 0x0800 | 66 | 44 | 11 | 0000-5E00-0101 | 10.10.10.1 | 0000-0000-0000 | 10.10.10.2 |

The first PE device of the first data center receives the ARP probe packet. The first PE device processes the ARP probe packet according to the forwarding rule of the interface of the first PE device. The ACL forwarding rule configured by the interface of the first PE device is: The first PE device discards a packet whose source address carries 00-00-5E-00-01. The interface of the first PE device receives the ARP probe packet, matches the ARP probe packet, and discards, according to the set forwarding rule, the ARP probe packet whose source MAC address carries 00-00-5E-00-01. In this way, the ARP probe packet can be sent, through broadcast, only in the first data center, and only a host in the first data center can receive the ARP probe packet, so that the AR probe packet cannot be forwarded by a PE device of the first data center to the second data center for diffusion.

The first L3GW sends, through broadcast, the ARP probe packet to each host on the same subnet as the first L3GW. Because of the ACL forwarding rule set by the first PE device, the ARP probe packet is actually sent, through broadcast, only to each host in the first data center. Therefore, each host in the first data center that is on the same subnet as the first L3GW receives the ARP probe packet. When receiving the ARP probe packet, each host checks whether the destination IP address in the ARP probe packet is the same as an IP address of the host. If the destination IP address in the ARP probe packet is different from the IP address of the host, the host directly discards the ARP probe packet. If the destination IP address in the ARP probe packet is the same as the IP address of the host, the host is the destination host whose MAC address needs to be found by using the ARP probe packet. The destination host encapsulates the MAC address of the destination host in a response packet for the ARP probe packet, and sends, through unicast, the ARP response packet to the first L3GW, where a source MAC address of the ARP response packet is the MAC address of the destination host, and a destination MAC address of the ARP response packet is the virtual MAC address of the first L3GW.

As shown in Table 2, the response packet for the first packet may be the ARP response packet. As shown in Table 2, the ARP response packet is sent, through unicast, by the destination host to the first L3GW. The source MAC address of the ARP response packet is the MAC address of the destination host; for example, the MAC address of the destination host is 36d5-8511-0309. A source IP address of the ARP response packet is the IP address 10.10.10.2 of the destination host, a destination IP address of the ARP response packet is the IP address of the first L3GW, and the destination MAC address of the ARP response packet is the virtual MAC address 0000-5E00-0101 of the first L3GW.

**Table 2**

| | | | Ethernet field (28-byte ARP response) | | | | | | | | |
|---|---|---|---|---|---|---|---|---|---|---|---|
| Ethernet header | | | ARP header | | | | | ARP packet | | | |
| Des | Sor | | | | | | | Sor | Sor IP | Des | Des IP |
| MAC | MAC | | | | | | | MAC | | MAC | |
| 0000-5E00-0101 | 36d5-8511-0309 | 0x0806 | 11 | 0x0800 | 66 | 44 | 11 | 36d5-8511-0309 | 10.10.10.2 | 0000-5E00-0101 | 10.10.10.1 |

The first L3GW receives the ARP response packet. The command arp virtual detect enable is configured for the first L3GW and the command is enabled, so that the first L3GW first determines a received packet. If the packet does not include the virtual MAC address of the first L3GW, for example, a destination MAC address of the packet is the real AMC address of the first L3GW, the first L3GW only generates or updates the ARP entry based on the packet, but does not generate the route according to the ARP entry. If the packet includes the virtual MAC address of the first L3GW, for example, the ARP response packet, the first L3GW not only generates or updates the ARP entry of the first L3GW based on the ARP response packet, but also learns the ARP entry by enabling a host routing function, so as to obtain the IP address of the destination host and an actual physical interface corresponding to the destination host, and generate a router entry including actual physical interface information, for example, generate a 32-bit direct route. The first L3GW adds the 32-bit direct route to the dynamic routing protocol for being sent to the core router outside the first data center and the second data center, so that the core router obtains the 32-bit direct route. The core router sends, based on the route, the traffic that is to access the destination host to a gateway of a data center in which the destination host is located, so that a traffic detour is avoided.

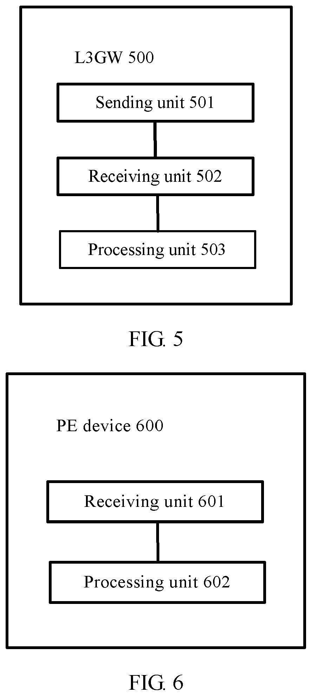

FIG 5 shows an L3GW for determining a traffic transmission path on a network according to this application. The L3GW may be the gateway 104 or the gateway 105 in FIG 1, or may be the first L3GW in the method flowcharts shown in FIG 2 and FIG 4, and may implement a function of the first L3GW. The network includes a first data center, a second data center, and a first network device. The first data center includes a first L3GW. The second data center includes a second L3GW. The first L3GW and the second L3GW are on a same subnet. The first network device outside the first data center sends traffic to the first data center by using the first L3GW, and the first network device outside the second data center sends the traffic to the second data center by using the second L3GW. The first L3GW includes a sending unit 501, a receiving unit 502, and a processing unit 503.

The sending unit 501 is configured to send a first packet to a host on the same subnet as the first L3GW, and send, to the first network device, a route to a destination host, where the route is used as a basis for the first network device to send the traffic to the destination host, and a source MAC address of the first packet is a virtual media access control MAC address of the first L3GW.

The receiving unit 502 is configured to receive a response packet for the first packet that is sent by the destination host, where a destination MAC address of the response packet for the first packet is the virtual MAC address, and a source MAC address of the response packet for the first packet is a MAC address of the destination host.

The processing unit 503 is configured to generate the route pointing to the destination host based on the response packet for the first packet.

In a possible implementation, the first packet may be an ARP probe packet or a gratuitous ARP packet, or may be an ND request packet. The first network device may be a core router. The sending unit 502 sends, through broadcast, the ARP probe packet or the ND request packet to each host in the first data center, where the source MAC address of the first packet is a virtual MAC address generated by the first L3GW and the second L3GW by using a VRRP. If the receiving unit 502 receives the response packet for the first packet, the processing unit 503 generates an entry by learning the response packet for the first packet that is received by the receiving unit 502, and converts, according to the entry, the entry to the route pointing to the destination host. The sending unit 501 sends the route to the core router by using a routing protocol.

Optionally, the sending unit 501 is further configured to send, before the first L3GW sends the first packet to the host on the same subnet as the first L3GW, a second packet to the host on the same subnet as the first L3GW, where a source MAC address of the second packet is a MAC address of the first L3GW. The receiving unit 502 is further configured to receive a response packet for the second packet that is sent by the destination host, where a destination MAC of the response packet for the second packet is the MAC address of the first L3GW.

In this embodiment, for a specific implementation of the sending unit 501, the receiving unit 502, and the processing unit 503, refer to the functions and the implementation steps of the first L3GW that are described in FIG 2 and FIG 4. For brevity, details are not described again.

FIG 6 shows a PE device for determining a traffic transmission path on a network according to this application. The PE device may be the provider edge 108 or the provider edge 109, or may be the first PE device in the method flowcharts shown in FIG 3 and FIG 4, and may implement a function of the first PE device. The network includes a first data center and a second data center. A first layer 3 gateway L3GW of the first data center and a second L3GW of the second data center are on a same subnet. A first PE device of the first data center and a second PE device of the second data center are interconnected. The device includes a receiving unit 601 and a processing unit 602.

The receiving unit 601 is configured to receive a first packet. The first packet includes a virtual media access control MAC address. The virtual MAC is a virtual MAC address generated by the first L3GW and the second L3GW by using a virtual router redundancy protocol.

The processing unit 602 is configured to filter the first packet according to a forwarding rule set by an interface of the first PE device. The forwarding rule is to filter a packet including a virtual MAC address.

In a possible implementation, the receiving unit 601 receives the first packet. The processing unit 602 filters the first packet according to the forwarding rule, that is, discards, according to a filtering rule, a packet whose source address is a virtual MAC address. Because a source MAC address of the first packet is the virtual MAC address generated by the first L3GW and the second L3GW by using the virtual router redundancy protocol, the processing unit 602 filters the first packet.

Optionally, the first PE device discards the first packet including the virtual MAC address according to the forwarding rule set by the interface of the first PE device.

In this embodiment, for a specific implementation of the receiving unit 601 and the processing unit 602, refer to the functions and the implementation steps of the first PE device that are described in FIG 3 and FIG 4. For brevity, details are not described again.

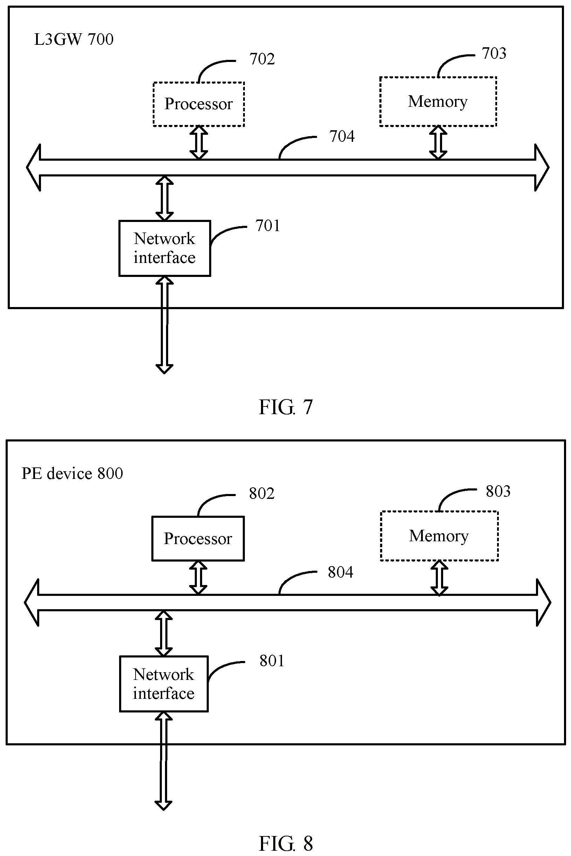

FIG 7 shows another L3GW for determining a traffic transmission path on a network according to this application. The L3GW may be the gateway 104 or the gateway 105 in FIG 1, or may be the first L3GW in the method flowcharts shown in FIG 2 and FIG 4, and may implement a function of the first L3GW. The network includes a first data center, a second data center, and a first network device. The first data center includes a first L3GW. The second data center includes a second L3GW. The first L3GW and the second L3GW are on a same subnet. The first network device outside the first data center sends traffic to the first data center by using the first L3GW, and the first network device outside the second data center sends the traffic to the second data center by using the second L3GW. The first L3GW includes a network interface 701, and may further include a processor 702 or a memory 703.

The processor 702 includes but is not limited to one or more of a central processing unit (English: central processing unit, CPU for short), a network processor (English: network processor, NP for short), an application-specific integrated circuit (English: application-specific integrated circuit, ASIC for short), and a programmable logic device (English: programmable logic device, PLD for short). The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof. The processor 702 is responsible for managing a bus 704 and general processing, and may further provide various functions, including timing, a peripheral interface, voltage regulation, power management, and another control function. The memory 703 may be configured to store data used by the processor 702 when the processor 702 performs an operation.

The network interface 701 may be a wired interface, for example, a fiber distributed data interface (English: Fiber Distributed Data Interface, FDDI for short), or an Ethernet (English: Ethernet) interface. The network interface 701 may alternatively be a wireless interface, for example, a wireless local area network interface.

The memory 703 may include but is not limited to a content addressable memory (English: content-addressable memory, CAM for short), for example, a ternary content addressable memory (English: ternary CAM, TCAM for short) or a random access memory (English: random-access memory, RAM for short).

The memory 703 may alternatively be integrated in the processor 702. If the memory 703 and the processor 702 are devices independent of each other, the memory 573 is connected to the processor 702, for example, the memory 703 may communicate with the processor 702 by using the bus. The network interface 701 may communicate with the processor 702 by using the bus, or the network interface 701 may be directly connected to the processor 702.

The bus 704 may include any quantity of interconnected buses and bridges. The bus 704 links together various circuits including one or more processors 702 represented by the processor 702 and a memory represented by the memory 703. The bus 704 may further link together various other circuits, such as a peripheral device, a voltage stabilizer, and a power management circuit. These are all well known in the art. Therefore, no further description is provided in this specification.

In a possible implementation, the network interface 701 is configured to send a first packet to a host on the same subnet as the first L3GW. The first packet includes a virtual media access control MAC address. The virtual MAC is a virtual MAC address generated by the first L3GW and the second L3GW by using a virtual router redundancy protocol VRRP. If the first L3GW receives a response packet for the first packet, the processor 702 is configured to generate a route pointing to a destination host based on the response packet for the first packet, and send the route to the first network device, where the route is used as a basis for the first network device to send the traffic to the destination host, and the first network device is configured to send the traffic to the destination host based on the route. If the first L3GW does not receive the response packet for the first packet, the processor 702 does not send, to the first network device, the route to the destination host.

Optionally, the network interface 701 is further configured to send, before the first L3GW sends the first packet to the host on the same subnet as the first L3GW, a second packet to the host on the same subnet as the first L3GW, where a source MAC address of the second packet is a MAC address of the first L3GW.

The network interface 701 is further configured to receive a response packet for the second packet that is sent by the destination host, where a destination MAC of the response packet for the second packet is the MAC address of the first L3GW.

Optionally, the first packet is an address resolution protocol ARP packet or a neighbor discovery ND packet.

In this embodiment, for a specific implementation of the processor 702 and the network interface 701, refer to the functions and the implementation steps of the first L3GW that are described in FIG 2 and FIG 4. For brevity, details are not described again.

FIG. 8 shows another PE device for determining a traffic transmission path on a network according to this application. The PE device may be the provider edge 108 or the provider edge 109, or may be the first PE device in the method flowcharts shown in FIG. 3 and FIG. 4, and may implement a function of the first PE device. The network includes a first data center and a second data center. A first layer 3 gateway L3GW of the first data center and a second L3GW of the second data center are on a same subnet. A first PE device of the first data center and a second PE device of the second data center are interconnected. The device includes a network interface 801 and a processor 802, and may further include a memory 803.

The processor 802 includes but is not limited to one or more of a central processing unit (English: central processing unit, CPU for short), a network processor (English: network processor, NP for short), an application-specific integrated circuit (English: application-specific integrated circuit, ASIC for short), and a programmable logic device (English: programmable logic device, PLD for short). The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof. The processor 802 is responsible for managing a bus 804 and general processing, and may further provide various functions, including timing, a peripheral interface, voltage regulation, power management, and another control function. The memory 803 may be configured to store data used by the processor 802 when the processor 802 performs an operation.

The network interface 801 may be a wired interface, for example, a fiber distributed data interface (English: Fiber Distributed Data Interface, FDDI for short), or an Ethernet (English: Ethernet) interface. The network interface 801 may alternatively be a wireless interface, for example, a wireless local area network interface.

The memory 803 may include but is not limited to a content addressable memory (English: content-addressable memory, CAM for short), for example, a ternary content addressable memory (English: ternary CAM, TCAM for short) or a random access memory (English: random-access memory, RAM for short).

The memory 803 may alternatively be integrated in the processor 802. If the memory 803 and the processor 802 are devices independent of each other, the memory 803 is connected to the processor 802, for example, the memory 803 may communicate with the processor 802 by using the bus. The network interface 801 may communicate with the processor 802 by using the bus, or the network interface 801 may be directly connected to the processor 802.

The bus 804 may include any quantity of interconnected buses and bridges. The bus 804 links together various circuits including one or more processors 802 represented by the processor 802 and a memory represented by the memory 803. The bus 804 may further link together various other circuits, such as a peripheral device, a voltage stabilizer, and a power management circuit. These are all well known in the art. Therefore, no further description is provided in this specification.

In a possible implementation, the network interface 801 is configured to receive a first packet. The first packet includes a virtual media access control MAC address. The virtual MAC is a virtual MAC address generated by the first L3GW and the second L3GW by using a virtual router redundancy protocol. The processor 802 filters the first packet according to a forwarding rule set by an interface of the first PE device. The forwarding rule is to filter a packet including a virtual MAC address.

In a possible implementation, the first PE device discards the first packet including the virtual MAC address according to the forwarding rule set by the interface of the first PE device.

In this embodiment, for a specific implementation of the processor 802 and the network interface 801, refer to the functions and the implementation steps of the first L3GW that are described in FIG. 2 and FIG 4. For brevity, details are not described again.

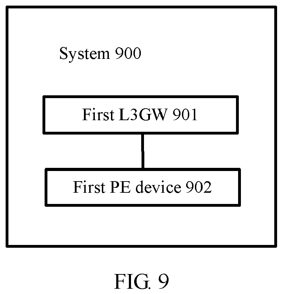

FIG 9 shows a system for determining a traffic transmission path on a network according to this application. The network includes a first data center, a second data center, and a first network device. A first layer 3 gateway L3GW 901 of the first data center and a second L3GW of the second data center are on a same subnet. The first network device outside the first data center sends traffic to the first data center by using the first L3GW. The first network device outside the second data center sends the traffic to the second data center by using the second L3GW. A first provider edge PE device 902 of the first data center and a second PE device of the second data center are interconnected. The system includes the first L3GW 901 and the first PE device 902.

The first L3GW 901 may be the gateway 104 or the gateway 105 in FIG 1, or may be the first L3GW in the method flowcharts shown in FIG 2 and FIG 4, and may implement a function of the first L3GW. The first L3GW 901 may alternatively be the first L3GW in FIG 5 or FIG 7.

The first PE device may be the provider edge 108 or the provider edge 109, or may be the first PE device in the method flowcharts shown in FIG 3 and FIG 4, and may implement a function of the first PE device. The first PE device may alternatively be the first PE device in FIG. 6 or FIG 8.

The first L3GW 901 is configured to: send a first packet to a host on the same subnet as the first L3GW; send, to the first network device, a route to a destination host, so that the first network device sends the traffic to the destination host based on the route; receive a response packet for the first packet that is sent by the destination host; and generate the route pointing to the destination host based on the response packet for the first packet, where a source MAC address of the first packet is a virtual media access control MAC address of the first L3GW, a destination MAC address of the response packet for the first packet is the virtual MAC address, and a source MAC address of the response packet for the first packet is a MAC address of the destination host.

The first PE device 902 is configured to receive the first packet, and filter the first packet according to a forwarding rule set by an interface of the first PE device, where the first packet includes the virtual media access control MAC address, and the virtual MAC is a virtual MAC address generated by the first L3GW and second L3GW by using a virtual router redundancy protocol.

In this embodiment, for a specific implementation of the first L3GW 901, refer to the functions and the implementation steps of the first L3GW that are described in FIG 2 and FIG 4. For a specific implementation of the first PE device 902, refer to the functions and the implementation steps of the first L3GW that are described in FIG 3 and FIG 4. For brevity, details are not described again.

It should be understood that in various embodiments of this application, sequence numbers of the foregoing method do not mean execution sequences. The execution sequences of the method should be determined according to functions and internal logic of the processes, and should not be construed as any limitation on the implementation processes of the embodiments of this application.

In the several embodiments provided in this application, it should be understood that the disclosed method and device may be implemented in other manners. For example, the described apparatus embodiments are merely examples. For example, the module division is merely logical function division, and may be another division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical units, that is, may be located in one position, or may be distributed on a plurality of network units. Some or all of the units may be selected based on actual requirements to achieve the objectives of the solutions of the embodiments.

In addition, function modules in the embodiments of the present invention may be integrated into one processing unit, or each of the modules may exist alone physically, or two or more modules are integrated into one unit. The foregoing integrated module may be implemented in a form of hardware, or may be implemented in a form of hardware in addition to a software functional unit.

When the integrated unit is implemented by a combination of hardware and software and sold or used as an independent product, the software may be stored in a computer readable storage medium. Based on such an understanding, in the technical solutions of the present invention, some technical features contributing to the prior art may be implemented in a form of a software product. The computer software product is stored in a storage medium, and includes several instructions for instructing a computer device (which may be a personal computer, a server, a network device, or the like) to perform all or some of the steps of the method described in the embodiments of the present invention. The foregoing storage medium may be a USB flash drive, a removable hard disk, a read-only memory (English: Read-Only Memory, ROM for short), a random access memory (English: Random Access Memory, RAM for short), a magnetic disk, or a compact disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining a traffic transmission path on a network, wherein the network comprises a first data center, a second data center, and a first network device, the first data center comprises a first layer 3 gateway L3GW, the second data center comprises a second L3GW, the first L3GW and the second L3GW are on a same subnet, the first network device outside the first data center sends traffic to the first data center by using the first L3GW, the first network device outside the second data center sends the traffic to the second data center by using the second L3GW, and the method comprises:
sending, by the first L3GW, a first packet to a host on the same subnet as the first L3GW, wherein the first packet carries a virtual media access control MAC address of the first L3GW;
receiving, by the first L3GW, a response packet for the first packet that is sent by a destination host, wherein a destination MAC address of the response packet for the first packet is the virtual MAC address, and a source MAC address of the response packet for the first packet is a MAC address of the destination host; and
generating, by the first L3GW, a route pointing to the destination host based on the response packet for the first packet, and sending the route to the first network device, wherein the route is used as a basis for the first network device to send the traffic to the destination host.

2. The method according to claim 1, wherein before the sending, by the first L3GW, a first packet to a host on the same subnet as the first L3GW, the method further comprises:
sending, by the first L3GW, a second packet to the host on the same subnet as the first L3GW, wherein a source MAC address of the second packet is a MAC address of the first L3GW;
receiving, by the first L3GW, a response packet for the second packet that is sent by the destination host, wherein a destination MAC of the response packet for the second packet is the MAC address of the first L3GW; and
skipping generating, by the first L3GW, the route pointing to the destination host based on the response packet for the second packet.

3. The method according to claim 1 or 2, wherein the first packet is an address resolution protocol ARP packet or a neighbor discovery ND packet.

4. The method according to claims 1 to 3, wherein the virtual MAC address of the first L3GW is a virtual MAC address generated by the first L3GW and the second L3GW by using a virtual router redundancy protocol VRRP

5. A method for determining a traffic transmission path on a network, wherein the network comprises a first data center and a second data center, a first layer 3 gateway L3GW of the first data center and a second L3GW of the second data center are on a same subnet, a first provider edge PE device of the first data center and a second PE device of the second data center are interconnected, and the method comprises:
receiving, by the first PE device, a first packet sent by the first L3GW to a host on the same subnet as the first L3GW, wherein the first packet comprises a virtual media access control MAC address of the first L3GW; and
filtering, by the first PE device, the first packet according to a forwarding rule set by an interface of the first PE device, so as to prevent the first packet from being sent to a host outside the first data center.

6. The method according to claim 5, wherein the filtering, by the first PE device, the first packet according to a forwarding rule set by an interface of the first PE device comprises:
confirming, by the first PE device, that the first packet carries the virtual MAC address of the first L3GW, and discarding the first packet according to the forwarding rule.

7. A first layer 3 gateway L3GW for determining a traffic transmission path on a network, wherein the network comprises a first data center, a second data center, and a first network device, the first data center comprises the first L3GW, the second data center comprises a second L3GW, the first L3GW and the second L3GW are on a same subnet, the first network device outside the first data center sends traffic to the first data center by using the first L3GW, the first network device outside the second data center sends the traffic to the second data center by using the second L3GW, and the first L3GW comprises:
a sending unit, configured to send a first packet to a host on the same subnet as the first L3GW, and send, to the first network device, a route to a destination host, wherein the route is used as a basis for the first network device to send the traffic to the destination host, and a source MAC address of the first packet is a virtual media access control MAC address of the first L3GW;
a receiving unit, configured to receive a response packet for the first packet that is sent by the destination host, wherein a destination MAC address of the response packet for the first packet is the virtual MAC address, and a source MAC address of the response packet for the first packet is a MAC address of the destination host; and
a processing unit, configured to generate the route pointing to the destination host based on the response packet for the first packet.

8. The method according to claim 7, wherein
the sending unit is further configured to send, before the first L3GW sends the first packet to the host on the same subnet as the first L3GW, a second packet to the host on the same subnet as the first L3GW, wherein a source MAC address of the second packet is a MAC address of the first L3GW; and
the receiving unit is further configured to receive a response packet for the second packet that is sent by the destination host, wherein a destination MAC of the response packet for the second packet is the MAC address of the first L3GW.

9. A first provider edge PE device for determining a traffic transmission path on a network, wherein the network comprises a first data center and a second data center, a first layer 3 gateway L3GW of the first data center and a second L3GW of the second data center are on a same subnet, the first PE device of the first data center and a second PE device of the second data center are interconnected, and the device comprises:
a receiving unit, configured to receive a first packet sent by the first L3GW to a host on the same subnet as the first L3GW, wherein the first packet comprises a virtual media access control MAC address; and
a processing unit, configured to filter the first packet according to a forwarding rule set by an interface of the first PE device, wherein the forwarding rule is to filter a packet comprising a virtual MAC address, so as to prevent the first packet from being sent to a host outside the first data center.

10. The device according to claim 9, wherein the processing unit is specifically configured to discard the first packet comprising the virtual MAC address according to the forwarding rule set by the interface of the first PE device.

11. A system for determining a traffic transmission path on a network, wherein the network comprises a first data center, a second data center, and a first network device, a first layer 3 gateway L3GW of the first data center and a second L3GW of the second data center are on a same subnet, the first network device outside the first data center sends traffic to the first data center by using the first L3GW, the first network device outside the second data center sends the traffic to the second data center by using the second L3GW, a first provider edge PE device of the first data center and a second PE device of the second data center are interconnected, and the system comprises:
the first L3GW, configured to send a first packet to a host on the same subnet as the first L3GW, receive a response packet for the first packet that is sent by the destination host, generate a route pointing to the destination host based on the response packet for the first packet, and send, to the first network device, the route to the destination host, wherein the route is used as a basis for the first network device to send the traffic to the destination host, a source MAC address of the first packet is a virtual media access control MAC address of the first L3GW, a destination MAC address of the response packet for the first packet is the virtual MAC address, and a source MAC address of the response packet for the first packet is a MAC address of the destination host; and
the first PE device, configured to receive a first packet, and filter the first packet according to a forwarding rule set by an interface of the first PE device, wherein the first packet comprises a virtual media access control MAC address, so as to prevent the first packet from being sent to a host outside the first data center.

12. The system according to claim 11, wherein the first L3GW is further configured to send, before the first L3GW sends the first packet to the host on the same subnet as the first L3GW, a second packet to the host on the same subnet as the first L3GW, receive a response packet for the second packet that is sent by the destination host, and skip generating the route pointing to the destination host based on the response packet for the second packet, wherein a source MAC address of the second packet is a MAC address of the first L3GW, and a destination MAC of the response packet for the second packet is the MAC address of the first L3GW.
